Europäisches Patentamt

European Patent Office

Office européen des brevets

(11) Publication number: **0 066 905**
**B1**

(12) **EUROPEAN PATENT SPECIFICATION**

(45) Date of publication of patent specification: **19.08.87**  (51) Int. Cl.⁴: **A 01 D 34/24**

(21) Application number: **82200536.9**

(22) Date of filing: **04.05.82**

(54) Mower lifting mechanism.

(30) Priority: **15.05.81 NL 8102395**

(43) Date of publication of application:
**15.12.82 Bulletin 82/50**

(45) Publication of the grant of the patent:
**19.08.87 Bulletin 87/34**

(84) Designated Contracting States:
**CH DE FR GB IT LI**

(56) References cited:
**DE-A-2 723 060**
**FR-A-1 558 820**
**FR-A-2 437 767**
**US-A-3 517 492**

(73) Proprietor: **C. van der Lely N.V.**
**Weverskade 10 P.O. Box 26**
**NL-3155 ZG Maasland (NL)**

(72) Inventor: **van der Lely, Ary**
**10a Weverskade**
**Maasland (NL)**
Inventor: **Bom, Cornelis Johannes Gerardus**
**16 Laan van Nieuw Rozenburg**
**Rozenburg (NL)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

This invention relates to an agricultural machine, such as a mowing machine, comprising a coupling frame, which is adapted to be hitched to a vehicle, and an operative member which is connected to the coupling frame by a coupling arm which is pivotally connected both to the coupling frame and to the operative member, the machine further comprising a lifting means for raising the operative member resulting in pivotal movement of the operative member relative to the coupling arm and of the coupling arm relative to the coupling frame, the lifting means extends between the coupling frame and an adjusting arm restrictively movable relative to the operative member by a stop.

A device of this kind is known from the French specification 2 437 767.

According to the present invention, between the operative member and the coupling arm there is a retaining member which limits movement of the operative member with respect to the coupling arm in the direction in which the end of the operative member remote from the coupling arm moves upwardly with respect to the coupling arm. In this way there is obtained a simple construction whereby the cutting member is readily to be moved out of his work position, for example into a manoeuvring position for negotiating obstacles during operation or for manoeuvring operation in the field, whereby the outer end of the cutting member is lifted upwardly relative to its inner end. Owing hereto the cutting member may be lifted in a better way.

With the arrangement according to the invention during the lifting operation mainly the cutting member is first turned with respect to the coupling arm and subsequently the coupling arm is turned with respect to the coupling frame. Thus, in particular, the outer end of the cutting member can be rapidly lifted from the ground, which can provide advantages in some circumstances.

In a further embodiment of the device according to the invention the stop and the adjusting arm are relatively disposed so that in a normal working position of the operative member the stop and/or the lifting means limits or limit movement of the operative member with respect to the coupling arm in the direction in which the end of the operative member remote from the coupling arm moves downwardly with respect to the coupling arm. Hereby the lifting means are acting on the cutting member so as to turn firstly the operative member relative to the coupling arm.

A very useful embodiment of the device according to the invention is obtained when the retaining member is coupled with resilient means which permits the limiting effect of the retaining member to be overcome.

According to this embodiment a transport position of the drive can easily be obtained by only handling the lifting means.

For a better understanding of the present invention and to show how it may be carried into effect, reference will now be made, by way of example, to the accompanying drawings, in which:

Figure 1 is a partial rear view of a mowing machine;

Figure 2 shows schematically, and on a reduced scale, an operative condition of the machine of Figure 1;

Figure 3 corresponds to Figure 2 but shows a different operative condition;

Figure 4 corresponds to Figures 2 and 3 but shows the machine in a transport condition; and

Figure 5 is a partial view corresponding to Figure 1 showing another embodiment of a mowing machine.

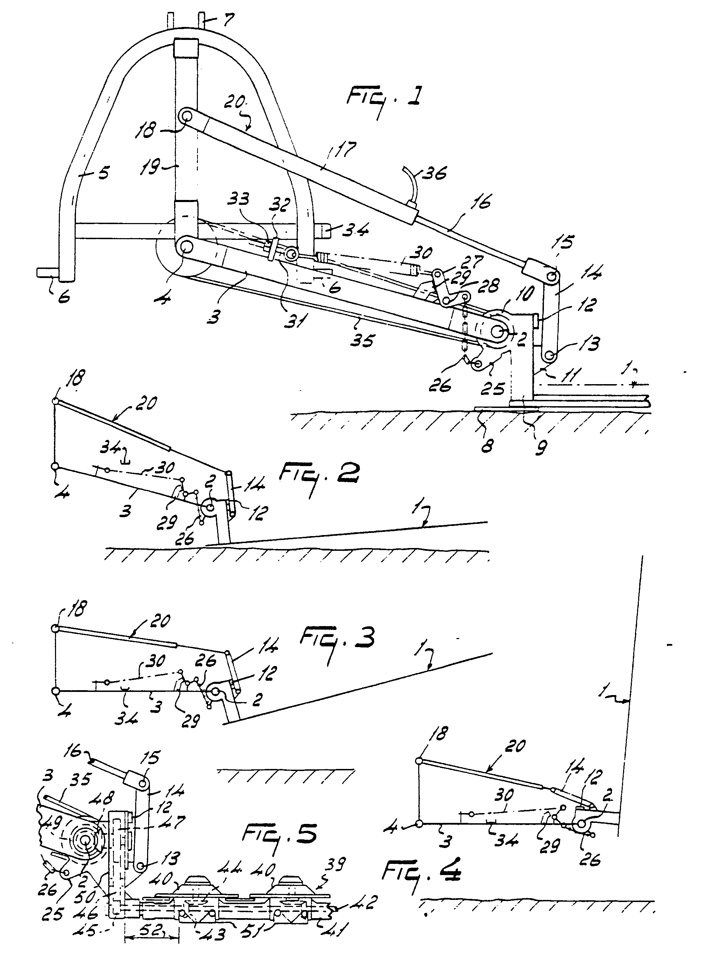

The agricultural machine shown in Figure 1 is a mowing machine comprising an operative member in the form of a cutter bar 1 having reciprocating cutters, but it may, as an alternative as shown in Figure 5, be a cutter bar having rotatable mowing dishes or mowing drums. The cutter bar 1 is directly attached by means of a horizontal axis pivot 2 to a coupling arm 3, which itself is directly attached by means of a horizontal axis pivot 4 to a coupling frame 5. The coupling frame 5 comprises pins 6 and lugs 7 for hitching the coupling frame to the lifting device of a tractor or a similar vehicle.

The cutter bar 1, in the embodiment of Figures 1 to 4, has skids 8 at the ends. When the cutter bar comprises mowing dishes (Figure 5) or a beam provided with mowing drums, supports can be arranged in a different way for supporting at least part of the weight of the machine on the ground. The cutter bar 1 comprises a carrying arm 9 provided with a bearing 10 which is rotatable about the axis of the pivot 2. A lug 11 is fastened to the carrying arm 9, and above the lug 11 there is a stop 12 near the top end of the carrying arm 9. An adjusting arm 14 is connected to the lug 11 by a pivot 13. The adjusting arm 14 is connected by a pivot 15 with a hydraulic cylinder and piston unit 20. The unit 20 comprises a cylinder 17 in which a piston rod 16 is movable. The cylinder 17 is connected by a pivot 18 to a frame beam 19 of the coupling frame 5.

A lug 25 is attached to the bearing 10, and a non-rigid retaining member, shown in the form of a chain 26 in the present embodiment, is connected to the lug 25. The other end of the chain 26 is connected to a lever in the form of a bell-crank 27, which is pivotable about a shaft 28 mounted on the coupling arm 3. The bell-crank 27 cooperates with a stop 29, which is also mounted on the coupling arm 3. The arm of the bell-crank opposite that to which the chain 26 is connected to a resilient mechanism in the form of a tension spring 30, whose end away from the bell-crank 27 is connected to a bolt 31, which is slidably arranged in a lug 32 fastened to the coupling arm 3. The bolt 31 is threaded at one end to receive a nut 33. The coupling frame 5 has a stop 34, which limits upward movement of the coupling arm 3 about the pivot 4.

Driving means (not shown) is provided around the pivot 2 and near the bearing 10 for driving the cutting elements of the cutter bar. Near the pivot 2 the driving means is connected by a belt 35 to a shaft which is located near the pivot 4 and is adapted to be coupled with the power take-off shaft of the tractor or the like to which the machine is hitched.

To put the machine into operation, it is hitched to the lifting device of a tractor or a similar vehicle, the pins 6 being connected with the lower arms of the lifting device and the lugs 7 with the top arm of the lifting device. A shaft coinciding with the axis of the pivot 4 can be coupled, for example by an auxiliary shaft, with the power take-off shaft of the tractor so that the cutting elements can be driven through the belt 35 from the power take-off shaft.

During operation, the cutter bar will bear on the ground by the skids or corresponding supports. If desired, part of the weight of the mowing machine can be supported by the coupling frame 5, which is not shown in detail in this embodiment, so that the supporting skids 6 bear on the ground only with a desired pressure. In order to obtain the normal working position, in which the cutter bar is usually horizontal or at least parallel to the ground, the lifting device of the tractor is moved into a working position in which the coupling frame 5 occupies a required position above the ground. In the working position the adjusting arm 14 is off the stop 12, and the chain 26 is not under tension. The unit 20 is adjusted so that the piston rod 16 is in an end position relative to the cylinder 17. This end position (not shown) may, if desired, be adjusted to set the maximum distance between the shaft 18 and 15. Thus the cutter bar is freely pivotable within limits about the pivot 2. This limited pivotability is obtained because the adjusting arm 14 is off the stop 12, and the distance between the lug 25 and the bell-crank 27 is such that the chain 26 is not under tension and permits the tag 25 to move with respect to the bell-crank 27. This free movement of the cutting member 1 around the shaft 2 enables the cutter bar 1 to follow unevenness of the ground. Unevenness of the ground can also be followed by movement of the coupling arm 3 about the pivot 4. Consequently unevenness of the ground can be followed by turning of the cutter bar 1 about the pivot 2 and by turning the coupling arm 3 about the pivot 4.

For example, for manoeuvring purposes in the field or for negotiating obstacles on the land the cutter bar 1 can be moved into a manoeuvring position in which the cutter bar is raised above the ground. For this purpose fluid, for example from the hydraulic mechanism of the tractor, is introduced through the hose 36 into the cylinder 17 so that the piston rod 16 is retracted. As a result the distance between the shafts 18 and 15 is decreased so that the adjusting arm 14 will turn about the pivot 13. When the adjusting arm 14 contacts the stop 12, the cutter bar 1 will turn upwardly about the pivot 2. The entire lifting mechanism (i.e. the unit 20) and the stop 12 are located above an imaginary plane containing the axes of the pivots 4 and 2. Turning of the cutter bar 1 about the pivot 2 will continue until the lug 25 has turned about the pivot 2 to an extent such that the chain 26 is taut. This situation is schematically shown in Figure 2. In this position the cutter bar slopes upwardly from the carrying arm 9 and its free end is raised above the ground. Turning of the cutter bar 1 with respect to the coupling arm 3 is then resisted because the spring 30 is stretched to an extent such that it exerts on the bell-crank 27 a force which cannot be overcome in a first instance by reducing the distance between the shafts 18 and 15. The tension of the spring is variable by turning the nut 33 on the bolt 31. The force of the spring 30 is such that the bell-crank 27 will remain in contact with the stop 29, so that a further reduction of the distance between the shafts 18 and 15 will cause the coupling arm 3 and the cutter bar 1 to turn as a single unit about the pivot 4. This movement can continue until the coupling arm 3 comes into contact with the stop 34 on the frame 5: this position is illustrated in Figure 3. In this position further turning of the coupling arm 3 about the pivotal shaft 4 is prevented. The force of the spring 30 is such that, provided that the pressure in the cylinder 17 is not raised further, the cutter bar with the coupling arm 3 will remain in the position shown in Figure 3. This is the manoeuvring position for the mowing device, in which the cutter bar is raised far enough above the ground to permit the tractor to which the machine is hitched to travel across the field or, for example, to negotiate an obstacle. Beyond the obstacle the cutter bar can be returned rapidly to the working position shown in Figure 1. Movement of the cutter bar from the position of Figure 1 to the position of Figure 3 and back can be accomplished rapidly since the various parts need be displaced only through a short distance, and the position of the coupling frame 5 above the ground need not be changed. It is particularly important that the frame 5 is able to remain in the same position with respect to the tractor, since displacement of the frame 5 by the lifting device would be time consuming and, once moved out of a given position it cannot be readily returned to the same position. Therefore, the construction described is capable of rapidly negotiating an obstacle by first moving into the position shown in Figure 2, in which the free end of the cutting member is raised so as to avoid damage of the cutting elements by an obstacle.

When the mower has to be transported on the road, the cutter bar 1 can be turned with respect to the coupling arm 3 into a position shown in Figure 4. The position of Figure 4 can be reached from the manoeuvring position of Figure 3 by supplying pressurized fluid to the cylinder 17, so as to retract the rod 16 further into the cylinder with such a force that the tension of the spring 30 is overcome. The cutter bar 1 will then turn about the pivot 2 and the chain 26 will turn the bell-crank 27 about the pivotal shaft 28 against the pressure of the spring 30. The terminal position of Figure 4 can be attained when the rod 16 is fully retracted into the cylinder 17, so as to provide a limit for the transport position shown in Figure 4. In order to attain the transport position the frame 5 need not be displaced vertically by means of the lifting device. Thus the working position of Figure 1 can be achieved rapidly by relieving the pressure in the hose 36 so that the cutter bar 1 can drop back into its desired working position without any need to adjust the height of the coupling frame by means of the lifting device of the tractor. It will be obvious that the mechanism may also comprise a double-acting cylinder in place of the single-acting cylinder 17.

Figure 5 shows an embodiment in which the cutter bar 39 comprises mowing dishes 40 arranged on a carrying beam 41. The carrying beam is provided with transmission means comprising a drive shaft 42 and gear wheels 43 and 44, by which the mowing dishes can be driven. The drive shaft 42 is coupled by gear wheels 45 to 49 with the drive belt 35. The carrying beam 41 preferably comprises a closed casing for the transmission means 42 to 44 and the carrying arm 50 comprises a gear box for the gear wheels 45 to 49. Preferably the carrying beam 41 comprises supports 51 beneath one or more of the mowing dishes 40 by which the cutter bar 39 can bear on the ground. The support 51 nearest to the carrying arm 50 is spaced from the carrying arm by a distance 52. The pivot 2 is located on the opposite side of the carrying arm 50 to the nearest support 51. Those components of the embodiment of Figure 5 which correspond with those of Figures 1 to 4 are designated by the same reference numerals. In the construction of the cutter bar 39 the idea of the invention is particularly important to avoid damage of the carrying beam 41 located beneath the mowing dishes.

Although in the embodiment described the manoeuvring position of Figure 3 is attained in two steps i.e. first the cutter bar 1 is turned about the pivot 2 and then the cutter bar 1 and the coupling arm 3 are turned as a unit about the pivot 4, it is possible to design a construction embodying the invention in which the cutter bar 1 is turned about the pivot 2 simultaneously with the turning of the coupling arm 3 about the pivot 4 so that the position shown in Figure 3 is achieved directly from that shown in Figure 1.

Whilst various features of the machine that have been described, and that are illustrated in the drawings, will be set forth in the following claims as inventive features it is to be noted that the invention is not necessarily limited to these features and that it encompasses all of the features that have been described both individually and in various combinations.

## Claims

1. An agricultural machine, such as a mowing machine, comprising a coupling frame (5) which is adapted to be hitched to a vehicle, and an operative member (1) which is connected to the coupling frame (5) by a coupling arm (3) which is pivotally connected both to the coupling frame (5) and to the operative member (1), the machine further comprising a lifting means (20) for raising the operative member (1) resulting in pivotal movement of the operative member (1) relative to the coupling arm (3) and of the coupling arm (3) relative to the coupling frame (5), the lifting means (20) extends between the coupling frame (5) and an adjusting arm (14) restrictively movable relative to the operative member (1) by a stop, characterized in that between the operative member (1) and the coupling arm (3) there is a retaining member (26) which limits movement of the operative member (1) with respect to the coupling arm (3) in the direction in which the end of the operative member (1) remote from the coupling arm moves upwardly with respect to the coupling arm (3).

2. A machine as claimed in claim 1, characterized in that the stop (12) and the adjusting arm (14) are relatively disposed so that in a normal working position of the operative member (1) the stop (12) and/or the lifting means (20) limits or limit movement of the operative member (1) with respect to the coupling arm (3) in the direction in which the end of the operative member (1) remote from the coupling arm (3) moves downwardly with respect to the coupling arm (3).

3. A machine as claimed in claim 1 or 2, characterized in that the retaining member (26) is coupled with resilient means (30) which permits the limiting effect of the retaining member (26) to be overcome.

4. A machine as claimed in any one of the preceding claims, characterized in that the retaining member (26) comprises a flexible connecting member (26) extending between the operative member (1) and a lever (27) which is pivotably mounted on the coupling arm (3), the lever (27) is connected, at a position away from the retaining member (26), to the resilient means (30) which tends to retain the lever (27) in contact with a stop (29) provided on the coupling arm (3).

5. A machine as claimed in claim 4, characterized in that the end of the resilient means (30) remote from the lever (27) is adjustably connected to the coupling arm (3).

6. A machine as claimed in any one of the preceding claims, characterized in that the coupling frame (5) is provided with a stop (34) for limiting the movement of the coupling arm (8) with respect to the coupling frame (5).

**Patentansprüche**

1. Landmaschine, beispielsweise Mähmaschine, mit einem Anschlußrahmen (5), der zum Anschluß an ein Fahrzeug geeignet ist, und mit einem Arbeitswerkzeug (1), das mit dem Anschlußrahmen (5) über einen Verbindungsarm (3) verbunden ist, der schwenkbar mit dem Anschlußrahmen (5) und dem Arbeitswerkzeug (1) verbunden ist, wobei die Maschine außerdem eine Hubeinrichtung (20) aufweist, die zum Anheben des Arbeitswerkzeuges (1) durch Schwenken relativ zum Verbindungsarm (3) und des Verbindungsarmes (3) relativ zum Anschlußrahmen (5) vorgesehen und zwischen dem Anschlußrahmen (5) und einem Lenker (14) angeordnet ist, der relativ zu dem Arbeitswerkzeug (1), durch einen Anschlag begrenzt, beweglich gelagert ist, dadurch gekennzeichnet, daß zwischen dem Arbeitswerkzeug (1) und dem Verbindungsarm (3) ein Halteglied (26) vorgesehen ist, das die Bewegung des Arbeitswerkzeuges (1) in bezug auf den Verbindungsarm (3) in der Richtung begrenzt, in welcher sich das vom Verbindungsarm abgewandte Ende des Arbeitswerkzeuges (1) in bezug auf den Verbindungsarm (3) nach oben bewegt.

2. Landmaschine nach Anspruch 1, dadurch gekennzeichnet, daß der Anschlag (12) und der Lenker (14) einander derart zugeordnet sind, daß in normaler Arbeitslage des Arbeitswerkzeuges (1) der Anschlag (12) und/oder die Hubeinrichtung (20) die Bewegung des Arbeitswerkzeuges gegenüber dem Verbindungsarm (3) in der Richtung begrenzen, in welcher sich das vom Verbindungsarm abgewandte Ende des Arbeitswerkzeuges (1) in bezug auf den Verbindungsarm (3) nach unten bewegt.

3. Landmaschine nach Anspruch 1 oder 2, dadurch gekennzeichnet, daß das Halteglied (26) mit einer Federeinrichtung (30) verbunden ist, mit der die Begrenzungswirkung des Haltegliedes zu überwinden ist.

4. Landmaschine nach einem der vorhergehenden Ansprüche, dadurch gekennzeichnet, daß das Halteglied (26) ein flexibles Verbindungsglied (26) aufweist, das sich zwischen dem Arbeitswerkzeug (1) und einem schwenkbar auf dem Verbindungsarm (3) angeordneten Hebel (27) erstreckt, der an einer von dem Halteglied entfernt liegenden Stelle mit der Federeinrichtung (30) verbunden ist, die den Hebel (27) mit einem auf dem Verbindungsarm angeordneten Anschlag (29) in Berührung zu halten sucht.

5. Landmaschine nach Anspruch 4, dadurch gekennzeichnet, daß das vom Hebel (27) abgewandte Ende der Federeinrichtung (30) mit dem Verbindungsarm (3) verstellbar verbunden ist.

6. Landmaschine nach einem der vorhergehenden Ansprüche, dadurch gekennzeichnet, daß der Anschlußrahmen (5) einen Anschlag (34) zur Begrenzung der Bewegung des Verbindungsarmes in bezug auf den Anschlußrahmen (5) aufweist.

### Revendications

1. Machine agricole, telle qu'une faucheuse, comprenant un chassis d'attelage (5) apte à être attelé à un véhicule, et un organe de travail (1) qui est relié au chassis d'attelage (5) par un bras d'accouplement (3) qui est articulé à la fois au chassis d'attelage (5) et à l'organe de travail (1), cette machine comprenant en outre un moyen de levage (20) pour soulever l'organe de travail (1) en donnant lieu à une rotation de l'organe de travail (1) par rapport au bras d'accouplement (3) et du bras d'accouplement (3) par rapport au chassis d'attelage (5), le moyen de levage (20) s'étendant entre le chassis d'attelage (5) et un bras de réglage (14) mobile restrictivement par rapport à l'organe de travail (1) au moyen d'une butée, caractérisée en ce qu'il y a entre l'organe de travail (1) et le bras d'accouplement (3) un organe de retenue (26) qui limite le mouvement de l'organe de travail (1) par rapport au bras d'accouplement (3) dans la direction selon laquelle l'extrémité de l'organe de travail (1) éloignée du bras d'accouplement se soulève par rapport au bras d'accouplement (3).

2. Machine selon la revendication 1, caractérisée en ce que la butée (12) et le bras de réglage (14) sont relativement disposés de telle sorte que, dans une position de travail normale de l'organe de travail (1), la butée (12) et/ou le moyen de levage (20) limite ou limitent le mouvement de l'organe de travail (1) par rapport au bras d'accouplement (3) dans la direction selon laquelle l'extrémité de l'organe de travail (1) éloignée du bras d'accouplement (3) s'abaisse par rapport au bras d'accouplement (3).

3. Machine selon la revendication 1 ou 2, caractérisée en ce que l'organe de retenue (26) est couplé à un moyen élastique (30) qui permet de surmonter l'effet limitatif de l'organe de retenue (26).

4. Machine selon l'une quelconque des revendications précédentes, caractérisée en ce que l'organe de retenue (26) comprend un organe de liaison flexible (26) s'étendant entre l'organe de travail (1) et un levier (27) monté de manière pivotante sur le bras d'accouplement (3), le levier (27) étant relié, en une position éloignée de l'organe de retenue (26), au moyen élastique (30) qui tend à retenir le levier (27) au contact d'une butée (29) ménagée sur le bras d'accouplement (3).

5. Machine selon la revendication 4, caractérisée en ce que l'extrémité du moyen élastique (30) éloignée du levier (27) est reliée de manière réglable au bras d'accouplement (3).

6. Machine selon l'une quelconque des revendications précédentes, caractérisée en ce que le chassis d'attelage (5) est pourvu d'une butée (34) pour limiter le mouvement du bras d'accouplement (3) par rapport au chassis d'attelage (5).

0 066 905

FIG. 1

FIG. 2

FIG. 3

FIG. 5

FIG. 4